(19) Europäisches Patentamt
European Patent Office
Office européen des brevets

(11) **EP 4 648 010 A1**

(12) **EUROPEAN PATENT APPLICATION**
published in accordance with Art. 153(4) EPC

(43) Date of publication:
**12.11.2025 Bulletin 2025/46**

(21) Application number: **24855066.7**

(22) Date of filing: **26.09.2024**

(51) International Patent Classification (IPC):
**G06T 7/70** (2017.01)     **G06T 7/11** (2017.01)

(86) International application number:
**PCT/CN2024/121328**

(87) International publication number:
**WO 2025/200348 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2024 CN 202410364379**

(71) Applicants:
• **Jiangsu XCMG Construction Machinery Research Institute Ltd.**
  **Xuzhou, Jiangsu 221004 (CN)**

• **JIANGSU XCMG STATE KEY LABORATORY TECHNOLOGY CO., LTD.**
  **Xuzhou Jiangsu 221004 (CN)**

(72) Inventors:
• **ZHANG, Yong**
  **Xuzhou, Jiangsu 221004 (CN)**
• **KONG, Yanan**
  **Xuzhou, Jiangsu 221004 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **IMAGE PROCESSING METHOD AND APPARATUS, AND DEMOLITION ROBOT AND COMPUTER-READABLE STORAGE MEDIUM**

(57)     The present disclosure relates to an image processing method and apparatus, a demolition robot, and a computer-readable storage medium, and relates to the field of computer technologies. The image processing method includes: performing an image segmentation on a to-be-processed image of a current operation scenario to obtain a plurality of image areas in the to-be-processed image, different image areas corresponding to different material categories; projecting point cloud data of the current operation scenario into an image area corresponding to the point cloud data in the plurality of image areas, according to a transformation relation between an image coordinate system where the to-be-processed image is located and a world coordinate system; and estimating pose information of each image area, according to a plurality of corresponding point cloud data of the each image area.

Fig. 1

110 perform an image segmentation on a to-be-processed image

120 project point cloud data into a corresponding image area

130 estimate pose information of the image area

EP 4 648 010 A1

**Description**

**CROSS-REFERENCE TO RELATED APPLICATIONS**

The present application is based on and claims the priority to the Chinese patent application No. 202410364379.8 filed on March 27, 2024, the disclosure of which is incorporated by reference herein in its entirety.

**TECHNICAL FIELD**

The present disclosure relates to the field of computer technologies, and in particular, to an image processing method, an image processing apparatus, a demolition robot, a computer-readable storage medium, and a computer program product.

**Background**

Robots, which are characterized by small size and great power, mobility and flexibility, safety and reliability, etc., have been widely applied to fields such as mines, tunnels, building demolition, cement industry, and emergency rescue. For example, robots can guarantee safety of constructors under a severe working environment and effectively improve working efficiency. With the further development of cutting-edge technologies such as artificial intelligence, computer vision, and deep learning algorithms, there is a necessary trend of development towards intelligent and automated operations by robots.

In the related arts, robots mostly operate in a manipulation mode of manual remote control, or perform image processing based on two-dimensional images of an operation scenario, to control robots to operate.

**Summary**

There is provided an image processing method according to some embodiments of the present disclosure, comprising: performing an image segmentation on a to-be-processed image of a current operation scenario to obtain a plurality of image areas in the to-be-processed image, different image areas corresponding to different material categories; projecting point cloud data of the current operation scenario into an image area corresponding to the point cloud data in the plurality of image areas, according to a transformation relation between an image coordinate system where the to-be-processed image is located and a world coordinate system; and estimating pose information of each image area, according to a plurality of corresponding point cloud data of the each image area.

In some embodiments, the estimating the pose information of the each image area comprises: determining at least one target plane for the each image area, according to the plurality of corresponding point cloud data of the each image area; and determining the pose information of the each image area, according to the at least one target plane.

In some embodiments, the at least one target plane comprises a plurality of target planes, the pose information comprises a normal vector, and the estimating the pose information of the each image area comprises: selecting a plurality of candidate point cloud data from the plurality of corresponding point cloud data; determining one target plane according to the plurality of candidate point cloud data; repeating above steps until the plurality of target planes are determined; and determining a normal vector of the each image area according to a mean of normal vectors of the plurality of target planes.

In some embodiments, the pose information comprises a centroid, and the estimating the pose information of the each image area comprises: determining a centroid of the each image area according to the plurality of corresponding point cloud data.

In some embodiments, the projecting the point cloud data of the current operation scenario into the image area corresponding to the point cloud data in the plurality of image areas comprises: coinciding a radar coordinate system for collecting the point cloud data with the world coordinate system; and jointly calibrating the world coordinate system and the image coordinate system to determine the transformation relation.

In some embodiments, the performing the image segmentation on the to-be-processed image of the current operation scenario comprises: encoding the to-be-processed image with an attention mechanism module in a machine learning model; and decoding the encoding result with a dilated convolution module in the machine learning model to obtain the plurality of image areas.

In some embodiments, the dilated convolution module comprises a plurality of dilated convolutional layers, different dilated convolutional layers having different dilation rates.

In some embodiments, the machine learning model further comprises a dropout layer connected after the dilated convolution module.

In some embodiments, the machine learning model further comprises a convolution module comprising a plurality of convolutional layers, and the machine learning model is trained by: calculating a loss function value of each convolutional layer of the plurality of convolutional layers, according to an output of the each convolutional layer; calculating a loss function value of the dilated convolution module, according to an output of the dilated convolution module; fusing the loss function value of the each convolutional layer and the loss function value of the dilated convolution module to determine a comprehensive loss function value for training the machine learning model.

In some embodiments, the current operation scenario comprises a demolition operation scenario, and the material category comprises a building material category.

There is provided a demolition robot according to other embodiments of the present disclosure, comprising: a processor configured to perform the image processing method in any of the above embodiments; and a controller configured to control a demolition device to operate according to a material category corresponding to an image area and pose information of the image area, which are determined by an image processing apparatus.

In some embodiments, the demolition robot further comprises: an image collecting apparatus configured to obtain a to-be-processed image of a current operation scenario; and a radar apparatus configured to obtain point cloud data of the current operation scenario.

In some embodiments, the processor performs the image processing method through a main thread, the controller controls the demolition device through the main thread, the image collecting apparatus obtains the to-be-processed image of the current operation scenario through the main thread, and the radar apparatus obtains the point cloud data of the current operation scenario through a sub-thread.

In some embodiments, the main thread and the sub-thread are run in parallel.

According to still other embodiments of the present disclosure, there is provided an image processing apparatus, comprising: a segmentation unit configured to perform an image segmentation on a to-be-processed image of a current operation scenario to obtain a plurality of image areas in the to-be-processed image, different image areas corresponding to different material categories; a projection unit configured to project point cloud data of the current operation scenario into an image area corresponding to the point cloud data in the plurality of image areas, according to a transformation relation between an image coordinate system where the to-be-processed image is located and a world coordinate system; and an estimation unit configured to estimate pose information of each image area, according to a plurality of corresponding point cloud data of the each image area.

In some embodiments, the estimation unit determines at least one target plane for each image area according to the plurality of corresponding point cloud data of the each image area, and determines the pose information of the each image area according to the at least one target plane.

In some embodiments, the at least one target plane comprises a plurality of target planes, the pose information comprises a normal vector, and the estimation unit selects a plurality of candidate point cloud data from the plurality of corresponding point cloud data, determines one target plane according to the plurality of candidate point cloud data, repeats above steps until the plurality of target planes are determined, and determines a normal vector of the each image area according to a mean of normal vectors of the plurality of target planes.

In some embodiments, the pose information comprises a centroid, and the estimation unit determines a centroid of the each image area according to the plurality of corresponding point cloud data.

In some embodiments, the projection unit coincides a radar coordinate system for collecting the point cloud data with the world coordinate system; and jointly calibrates the world coordinate system and the image coordinate system to determine the transformation relation.

In some embodiments, the segmentation unit encodes the to-be-processed image with an attention mechanism module in a machine learning model, and decodes the encoding result with a dilated convolution module in the machine learning model to obtain the plurality of image areas.

In some embodiments, the dilated convolution module comprises a plurality of dilated convolutional layers, different dilated convolutional layers having different dilation rates.

In some embodiments, the machine learning model further comprises a dropout layer connected after the dilated convolution module.

In some embodiments, the machine learning model further comprises a convolution module comprising a plurality of convolutional layers, and the machine learning model is trained by: calculating a loss function value of each convolutional layer of the plurality of convolutional layers, according to an output of the each convolutional layer; calculating a loss function value of the dilated convolution module, according to an output of the dilated convolution module; and fusing the loss function value of the each convolutional layer and the loss function value of the dilated convolution module to determine a comprehensive loss function value for training the machine learning model.

In some embodiments, the current operation scenario comprises a demolition operation scenario, and the material category comprises a building material category.

According to still other embodiments of the present disclosure, there is provided an image processing apparatus, comprising: a memory; and a processor coupled to the memory, the processor being configured to, based on instructions stored in the memory, perform the image processing method in any of the above embodiments.

According to further embodiments of the present disclosure, there is provided a computer-readable storage medium having a computer program stored thereon, that when executed by a processor, implements the image processing method in any of the above embodiments.

According to further embodiments of the present disclosure, there is also provided a computer program product, comprising instructions, that when executed by a processor, cause the processor to perform the image processing method according to any of the above embodiments.

**Brief description of the drawings**

The accompanying drawings, which constitute part of the specification, illustrate embodiments of the present disclosure and together with the description, serve to explain the principles of the present disclosure.

The present disclosure may be more clearly understood according to the following detailed description, taken with reference to the accompanying drawings, in which:

Fig. 1 illustrates a flow diagram of an image processing method according to some embodiments of the present disclosure;

Fig. 2a illustrates a schematic diagram of image segmentation according to some embodiments of the present disclosure;

Fig. 2b illustrates a schematic diagram of a machine learning model according to some embodiments of the present disclosure;

Figs. 2c and 2d illustrate schematic diagrams of image sample labeling according to some embodiments of the present disclosure;

Fig. 2e illustrates a schematic diagram of pose estimation according to some embodiments of the present disclosure;

Fig. 3 illustrates a flow diagram of an image processing method according to other embodiments of the present disclosure;

Fig. 4a illustrates a block diagram of a demolition robot according to some embodiments of the present disclosure;

Fig. 4b illustrates a block diagram of an image processing apparatus according to some embodiments of the present disclosure;

Fig. 5 illustrates a block diagram of an image processing apparatus according to other embodiments of the present disclosure;

Fig. 6 illustrates a block diagram of an image processing apparatus according to still other embodiments of the present disclosure.

**Detailed description**

Various exemplary embodiments of the present disclosure will now be described in detail with reference to the accompanying drawings. It should be noted that: relative arrangements, numerical expressions and numerical values of components and steps set forth in these embodiments do not limit the scope of the present disclosure unless specifically stated otherwise.

Meanwhile, it should be understood that the sizes of the parts shown in the drawings are not drawn in an actual scale for ease of description.

The following description of at least one exemplary embodiment is merely illustrative in nature and should never be any limitation on this disclosure and its application or use.

Techniques, methods, and devices known to one of ordinary skill in the related art may not be discussed in detail, but are intended to be part of the specification where appropriate.

In all examples shown and discussed herein, any specific value should be construed as exemplary only and not as limiting. Thus, other examples of the exemplary embodiments may have different values.

It should be noted that: similar reference numbers and letters refer to similar items in the following figures, and thus, once a certain item is defined in one figure, it need not be further discussed in subsequent figures.

The inventors of the present disclosure have found that in the related art described above, there is the following problems: difficulty in automatically identifying poses of various areas in an operation scenario, resulting in a poor image processing effect.

In view of this, the present disclosure provides an image processing technical solution, capable of improving an image processing effect.

As mentioned above, robots mostly perform demolition operation in a manipulation mode of manual remote control, which cannot be intelligently and automatically controlled. For example, demolition robots cannot adaptively determine a material of an operation object, and thus cannot accurately estimate a pose of the operation object on the basis of the material identification.

In view of the above technical problems such as low intelligent and automated control and inefficient operation in the robot operation, the present disclosure provides a pose estimation technical solution based on the material identification.

For example, in the present disclosure, a deep material segmentation model is designed to implement material area segmentation on an image of an operation scenario; by using the operation object pose estimation method with multi-sensor information fusion, accurate three-dimensional coordinates and pose estimation can be provided for a control system such as a robotic arm, and precision and efficiency of the demolition operation can be effectively improved.

For example, the technical solutions of the present disclosure may be implemented by using the following embodiments.

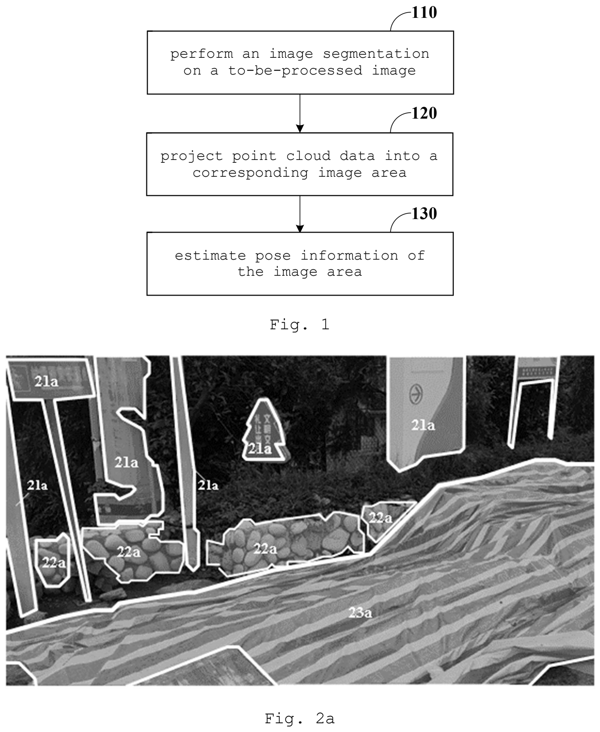

Fig. 1 illustrates a flow diagram of an image processing method according to some embodiments of the present disclosure.

As shown in Fig. 1, in step 110, image segmentation is performed on a to-be-processed image of a current operation scenario to obtain a plurality of image areas in the to-be-processed image, different image areas corresponding to different material categories.

In some embodiments, the current operation scenario comprises a demolition operation scenario, and the material categories comprise building material texture categories, which may comprise concrete, brick, metal, wood, plastic, and the like.

For example, a video of a working scenario of a demolition robot may be captured by an image collecting apparatus (e.g., a camera, a video camera, etc.), and the to-be-processed image may be intercepted at a certain frame interval.

The image areas corresponding to different material categories obtained after the image segmentation will be described below by the embodiments in Fig. 2a.

Fig. 2a illustrates a schematic diagram of image segmentation according to some embodiments of the present disclosure.

As shown in Fig. 2a, the to-be-processed image of the demolition operation scenario comprises objects belonging to various building material texture categories, such as plastic, metal, stone, and wood materials.

For example, after the image segmentation is performed on the to-be-processed image, image areas 21a, 22a, 23a, and 24a can be obtained. The image area 21a corresponds to an area where an object of the metal material category is located, the image area 22a corresponds to an area where an object of the stone material category is located, the image area 23a corresponds to an area where an object of the plastic material category is located, and the image area 24a corresponds to an area where an object of the wood material category is located.

In some embodiments, the image segmentation on the to-be-processed image may be performed by using a machine learning model. For example, for a demolition operation scenario, a suitable deep semantic segmentation algorithm and model can be selected based on actual operation conditions and adapted to a machine learning model capable of performing material area segmentation.

In some embodiments, the to-be-processed image is encoded by using an attention mechanism module in the machine learning model. For example, the attention mechanism module may comprise a self-attention mechanism module, a cross- attention mechanism module, and the like.

For example, a deep semantic segmentation model with an encoder of Transformer, such as SegFormer, may be used as the machine learning model. The SegFormer has 6 layers of encoders of Transformer, and uses a structurally simple decoder to fuse feature maps outputted by last 4 layers of encoders by using two layers of MLP (Multilayer Perceptron).

In some embodiments, the encoding result is decoded by using a dilated convolution module in the machine learning model to obtain the plurality of image areas. For example, the dilated convolution module comprises a plurality of dilated convolutional layers, different dilated convolutional layers having different dilation rates.

For example, the dilated convolution module comprises one convolutional layer, three dilated convolutional layers, and one convolutional layer in this order. Dilation rates of the three dilated convolutional layers can be set according to actual requirements, such as 2, 4 and 6 respectively.

In this way, the use of the dilated convolutional layers with different dilation rates enlarges a receptive field, to capture a wider range of context information; and the cascade of the three different dilated convolutional layers helps the machine learning model to better understand context information of the input data, to further enhance generalization and stability of the model.

In some embodiments, the machine learning model further comprises a dropout layer connected after the dilated convolution module. For example, the dropout layer may be connected at the end of the dilated convolution module, so that some neurons are temporarily "shut down" in the training process.

In this way, the dependency of the neural network on a specific neuron can be reduced, to prevent overfitting caused by the model learning detail features in training data, thereby making the model more robust and generalized.

In the above embodiments, the decoder part of the attention mechanism-based machine learning model is improved, so that the machine learning model can adapt to image segmentation in a specific scenario, such as segmentation of material areas (concrete, wood, metal, plastic, etc.) in a demolition scenario, so that the material identification performance can be improved by adaptation and parameter adjustment.

In some embodiments, the machine learning model further comprises a convolution module comprising a plurality of convolutional layers for decoding.

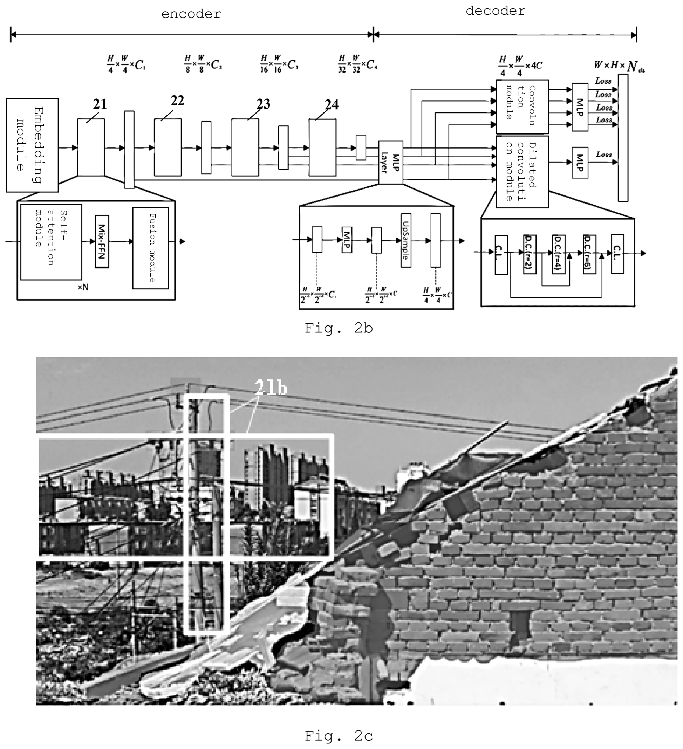

The structure of the machine learning model is described below by an embodiment in Fig. 2b.

Fig. 2b illustrates a schematic diagram of a machine learning model according to some embodiments of the present disclosure.

As shown in Fig. 2b, the machine learning model comprises encoder and decoder parts. For example, the encoder part comprises an embedding module for performing overlap patch embedding, attention mechanism-based multilayer transformer encoder modules 21 to 24, and an MLP layer; and the decoder part comprises a convolution module and a dilated convolution module(Dilated Convolution Cascade Module).

For example, each transformer encoder module comprises an attention module, a Mix-FFN (Mix-Feed Forward Network) module, and a fusion module for performing overlap patch fusion; and the MLP layer comprises an MLP layer and an Upsample layer.

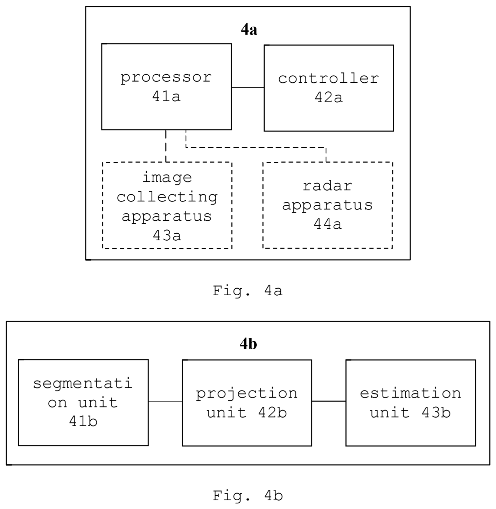

For example, the convolution module comprises a plurality of convolutional layers, respectively outputting decoding results, as shown in Fig. 2b, 4 decoding results in total; and the dilated convolution module comprises two convolutional layers (C.L.) and three dilated convolutional layers (D.C.). Dilation rates of the three dilated convolutional layers are 2, 4 and 6, respectively. The dilated convolution module also outputs 1 decoding result.

In some embodiments, the machine learning model may be improved based on a SegFormer semantic segmentation model: using one dilated convolution module in the decoder part to replace one previous independent convolution module. In this way, while the generalization and stability of the model are enhanced, the training speed of the network is increased, preventing overfitting of the model.

In the above embodiments, the decoder part of the attention mechanism-based machine learning model is improved, so that the machine learning model can adapt to image segmentation in a specific scenario, such as segmentation of material areas (concrete, wood, metal, plastic, etc.) in a demolition scenario, thereby improving the material identification performance by adaptation and parameter adjustment.

In some embodiments, the machine learning model may be trained by: calculating a loss function value of each convolutional layer of the plurality of convolutional layers, according to an output of the each convolutional layer; calculating a loss function value of the dilated convolution module, according to an output of the dilated convolution module; and fusing the loss function value of the each convolutional layer and the loss function value of the dilated convolution module to determine a comprehensive loss function value for training the machine learning model. For example, for the loss function, a cross entropy loss function may be used.

For example, the convolution module in Fig. 2b outputs 4 decoding results, and the dilated convolution module also outputs 1 decoding result; based on the 5 processing results, 5 losses are respectively calculated by introducing a multi-level supervision loss; and the 5 losses are fused for training the machine learning model.

In the above embodiment, by the multi-level supervision loss mechanism, additional supervision signals (such as cross entropy loss function) are respectively introduced at different levels of the machine learning model to guide the training; and then the losses of the levels are fused to generate a final segmentation result by a convolution operation. In this way, better control in the characterization of the features in the training process can be made to more effectively capture the complex structure of the data and enhance robustness of the model, thereby improving the performance of the model in the segmentation task.

In the above embodiments, the dilated convolution module and the dropout layer are added, and the multi-level supervision loss is introduced, which can adapt to and improve the image segmentation performance of the machine learning model, and can be suitable for material identification in various operation scenarios such as a demolition operation scenario, so as to improve operation quality.

In some embodiments, before the machine learning model is trained, there is a need of constructing an image sample set, i.e., labeling image samples. For example, a video of an actual operation scenario is captured, and the captured video is intercepted into images at a certain frame interval to form the image sample set.

For example, for a demolition operation scenario, the image sample set comprising operation objects in different stages may be constructed based on forms of the operation objects in the stages of the demolition. A category of the operation objects in different stages can comprise a completely standing building (such as a storied house), a partially collapsed building, a completely collapsed building, and the like; sufficient image samples are collected for the category of the operation object in each stage; and the image sample set is divided into a training set and a test set according to a certain proportion, which are used for training and testing the machine learning model, respectively.

For example, a material category of the operation object in the image sample may be labeled by using a labeling tool. On the basis of an SAM deep image segmentation large model, massive image segmentation can be performed for labeling. For example, labeling may be performed by using open-source software such as Anylabeling.

For example, a video of a working scenario of a demolition robot is captured, and images are intercepted at a certain frame interval as image samples. On the image sample, different image areas, such as concrete, brick, metal, wood, plastic, and background areas, are labeled; and according to different material categories, category names, category serial numbers and the like are labeled.

In this way, the natural object and the background area can be quickly and accurately segmented, and an area desired for segmentation can be distinguished from a surrounding area by receiving various manually given prompt information, so that accuracy and efficiency of image labeling are improved.

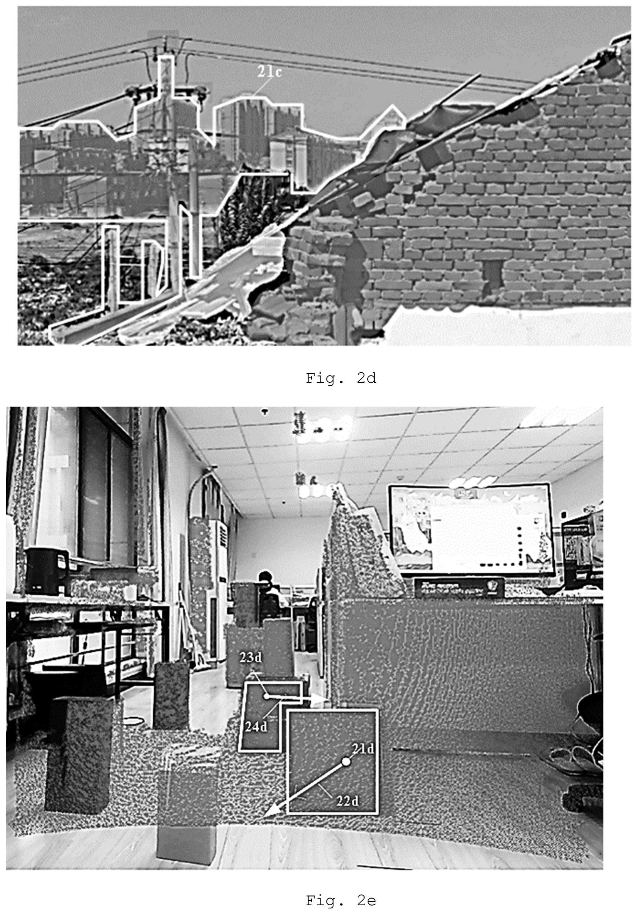

Labeling of the image sample is described below by the embodiments shown in Figs. 2c and 2d.

Figs. 2c and 2d illustrate schematic diagrams of image sample labeling according to some embodiments of the present disclosure.

As shown in Fig. 2c, for image areas where materials of different shapes are located, different segmentation prompts may be given to a machine learning model for labeling, such as a rectangular box and a polygonal box, and in an image area to be segmented, some points, lines, or area boxes are given as prompts. A user may give a prompt box 21b as shown in Fig. 2c, etc., and a deep segmentation model such as SAM performs image segmentation and labeling based on the prompt box.

For example, for a simple scenario, automatic segmentation on an entire image by software may be chosen. On this basis, shortcut keys can be set to help a user to quickly perform functions such as image browsing, image zooming-in and zooming-out, prompt point updating (such as deleting a point of a polygon border), labeling modification, and automatic generation of a .json file with the same name as the file in response to labeling being ended. A json2png.py file can be format-converted into an image file in a png format.

As shown in Fig. 2d, the deep segmentation model such as the SAM performs image segmentation based on the prompt box 21b to obtain an image area 21c.

In some embodiments, on the basis of calling the SAM for labeling of the material area, a variety of auxiliary editing functions may be added to improve labeling efficiency. For example, a labeled image sample set may be format-converted, so as to match with the machine learning model for material image segmentation, and an algorithm configuration file may be modified for model training; and finally, a deep semantic segmentation model is obtained to perform lightweight processing on a material segmentation model, and integrate the material segmentation model into software for deployment.

In the above embodiments, in the case where robots perform operations such as demolition, two-dimensional image collecting is performed in real time by using a video camera, and an collected two-dimensional image is labeled efficiently by a large model to obtain a truth value of image segmentation, thereby constructing sufficient training samples for model training. The trained material segmentation model is deployed into software to accurately obtain a material segmentation result in real time.

In addition, by means of the deep image segmentation large model (such as the SAM), experience is learned from massive image samples; the deep image segmentation large model can accept various targeted manual prompts, to improve efficiency in labeling of a truth value of a category of an irregular material area and reduce burdens of manual labeling.

On the basis of that image segmentation is performed to obtain different image areas corresponding to different materials, image processing may be continued by steps 120 and 130 in Fig. 1.

In step 120, point cloud data of the current operation scenario is projected into an image area corresponding to the point cloud data in the plurality of image areas, according to a transformation relation between an image coordinate system where the to-be-processed image is located and a world coordinate system.

In some embodiments, a radar coordinate system for collecting the point cloud data is coincided with the world coordinate system; and the world coordinate system and the image coordinate system are jointly calibrated to determine the transformation relation.

For example, a two-dimensional to-be-processed image of the current operation scenario may be obtained through an image collecting apparatus such as a video camera, and three-dimensional point cloud data of the current operation scenario may be obtained through a radar apparatus such as a solid-state radar. In order to project the three-dimensional point cloud data into the two-dimensional to-be-processed image, a transformation relation from the point cloud data to image row and column coordinates needs to be obtained.

For example, the transformation relation may be determined by joint calibration on the video camera and the solid-state radar. The joint calibration on the video camera and the solid-state radar can be understood as video camera exterior parameter calibration, but it is required that the world coordinate system is coincided with the radar coordinate system.

In some embodiments, the joint calibration may be performed by using calibration methods such as checkerboard calibration and Tsai's calibration.

For example, by the Tsai's calibration, point pairs formed by three-dimensional coordinates of a plurality of point cloud data and two-dimensional image row and column coordinates of a plurality of corresponding image pixels, a target surface size and pixel size of the camera, and the like, need to be obtained first. Image row and column coordinates of a camera optical center in an intrinsic parameter are $u_0$ and $v_0$, which are an image center; by using a triangular similarity in a pinhole imaging principle, it is substituted into point pair simultaneous equations to solve components $t_x$ and $t_y$ in a rotation matrix $R = \{r_{i,j}\}$ and a translation matrix T; a component $t_z$ in the translation matrix and equivalent focal lengths $f_x$ and $f_y$ in the intrinsic parameter are solved; and joint optimization of $u_0, v_0, t_z, f_x, f_y$ and a distortion coefficient k (k may have an initial value of 0) is realized by nonlinear optimization.

For example, by the calculation of the jointly calibrated parameter, the transformation relation for projection of the three-dimensional coordinates of the point cloud data to the two-dimensional image row and column coordinates can be obtained. For certain point cloud data with three-dimensional coordinates ($X, Y, Z$), transformed two-dimensional image row and column coordinates ($u, v$) can be calculated by:

$$\begin{bmatrix} u \\ v \\ 1 \end{bmatrix} = \lambda \begin{bmatrix} f_x & 0 & u_0 \\ 0 & f_y & v_0 \\ 0 & 0 & 1 \end{bmatrix} \begin{bmatrix} r_{11} & r_{12} & r_{13} & t_x \\ r_{21} & r_{22} & r_{23} & t_y \\ r_{31} & r_{32} & r_{33} & t_z \end{bmatrix} \begin{bmatrix} X \\ Y \\ Z \\ 1 \end{bmatrix}$$

where $\lambda$ is a scale factor.

In step 130, pose information of each image area is estimated according to a plurality of point cloud data corresponding to the each image area. For example, the pose information may comprise information such as a normal vector and centroid of the image area.

In the above embodiments, by projecting the three-dimensional point cloud data of the current operation scenario to the image areas corresponding to different materials in the two-dimensional image, the pose information of the area where each material is located is estimated. In this way, automatic identification of the pose of the area where each material is located in the operation scenario can be achieved, thereby improving the effect of the image processing.

In some embodiments, each image area corresponds to one material category, and a corresponding point cloud cluster (comprising the plurality of point cloud data) projected to each image area can be obtained according to the calculated transformation relation of the three-dimensional point cloud data to the two-dimensional image row and column coordinates. For example, a centroid and normal vector of an image area may be calculated according to the corresponding point cloud cluster of the image area.

For example, N image areas obtained by image segmentation according to the machine learning model are $\{C_i\}_i^N$; and after transformation of three-dimensional point cloud data to two-dimensional image coordinates, a point cloud cluster $\{P_i\}_i^N$, which corresponds to each image area, can be obtained, wherein an $i$-th point cloud cluster $P_i$, which corresponds to an image area $C_i$, comprises three-dimensional coordinates of $n_i$ point cloud data:

$$P_i = \{x_i^j, y_i^j, z_i^j\}_{j=1}^{n_i}$$

In some embodiments, at least one target plane of the each image area is determined according to the plurality of corresponding point cloud data of the each image area; and the pose information of the each image area is determined according to the at least one target plane.

For example, the at least one target plane comprises a plurality of target planes, and the pose information comprises a normal vector. A plurality of candidate point cloud data are selected from the plurality of corresponding point cloud data; one target plane is determined according to the plurality of candidate point cloud data; above steps are repeated until the plurality of target planes are determined; and a normal vector of the each image area is determined according to a mean of normal vectors of the plurality of target planes.

For example, for a point cloud cluster corresponding to one image area, at least a plurality of point cloud data are selected in each round to form a point pair; a target plane in a current round is determined by using coordinate information of the plurality of point cloud data in the point pair, and a normal vector of the target plane is calculated; the above steps are iteratively executed so that a plurality of target planes and a plurality of normal vectors can be obtained; and weighted average on the plurality of normal vectors is performed to calculate a normal vector of the image area, for guiding a demolition device such as a robotic arm demolition head to operate at an angle as perpendicular as possible to a demolition plane, thereby improving the operation effect.

For example, for each point cloud cluster, two point cloud data, $P_i^s = \{x_i^s, y_i^s, z_i^s\}$ and $P_i^s = \{x_i^t, y_i^t, z_i^t\}$, are randomly selected from the point cloud cluster to form a vector $\overrightarrow{P_i^s P_i^t}$ :

$$\overrightarrow{P_i^s P_i^t} = \{x_i^s - x_i^t, y_i^s - y_i^t, z_i^s - z_i^t\}$$

According to $\overrightarrow{P_i^s P_i^t}$ being perpendicular to a normal vector $\vec{\theta} = \{\theta_x, \theta_y, \theta_z\}$ of a target plane where the vector is located ( $\overrightarrow{P_i^s P_i^t} \perp \vec{\theta}$ ), an equation for the normal vector of the target plane can be determined:

$$\theta_x \cdot (x_i^s - x_i^t) + \theta_y \cdot (y_i^s - y_i^t), \theta_z \cdot (z_i^s - z_i^t) = 0$$

For a plurality of point cloud data pairs selected from the point cloud cluster, a plurality of normal vector equations can be determined to form an equation set; and the equation set is solved by using a least square method to calculate the normal vector $\vec{\theta}$ of the image area corresponding to the point cloud cluster.

In some embodiments, the pose information comprises a centroid. The centroid of the each image area is determined according to the plurality of corresponding point cloud data. For example, the image area $C_i$ corresponds to the point cloud cluster $P_i = \{x_i^j, y_i^j, z_i^j\}_{j=1}^{n_i}$ , coordinates of a centroid of the $C_i$ can be calculated by:

$$\bar{x}_i = \frac{\sum_{j=1}^{n_i} x_i^j}{n_i}, \bar{y}_i = \frac{\sum_{j=1}^{n_i} y_i^j}{n_i} \qquad , \bar{z}_i = \frac{\sum_{j=1}^{n_i} z_i^j}{n_i}$$

In the above embodiments, the target category semantic of the image deep semantic segmentation model is converted into the material category semantic, so that the segmentation of the material areas of the scenario is realized; by using the joint calibration on the high-precision video camera and the solid-state radar, the radar point cloud data can correspond to the image material segmentation result; the projection matrix is constructed by the calibration parameter to project the radar point cloud data to the two-dimensional image, so that material segmentation for the point cloud data is realized; the point cloud cluster in each segmented material area can be used for centroid positioning and attitude estimation.

The processing of the pose estimation will be described below by the embodiments in Fig. 2e.

Fig. 2e illustrates a schematic diagram of the pose estimation according to some embodiments of the present disclosure.

As shown in Fig. 2e, based on the joint calibration result of the camera and the radar, each point cloud data may be projected into a two-dimensional image to determine an image area (white area box in Fig. 2e) to which the each point cloud data (dot-shaped graph in Fig. 2e) belongs and a corresponding material category, thereby calculating the pose information of the image areas.

In some embodiments, according to the point cloud data (i.e., point cloud cluster) belonging to the same image area, a centroid and normal vector of the image area are solved. For example, by using three-dimensional coordinates of all point cloud data in a point cloud cluster, a centroid of an image area where the point cloud cluster is located is calculated; at least three points are randomly selected from the point cloud cluster many times to estimate a normal vector of a target plane for the image area, and accordingly the normal vector of the target plane is determined to guide a robotic arm demolition head to operate in a manner of being perpendicular to a demolition plane.

For example, with the above method, it can be determined that centroids of two image areas in Fig. 2e are centroids 21d and 23d, respectively, and normal vectors of the two image areas are vectors 22d and 24d, respectively.

In the above embodiments, the image processing technical solution suitable for various application scenarios (such as the demolition robot operation scenario) is provided, which can achieve identification and pose estimation of a material in an image; and for practical application scenarios such as selecting an operation tool and adjusting an operation parameter by an operation robot, a deep material segmentation network model is designed, and in conjunction with dense radar point cloud data, pose estimation of a material area is achieved. The technical solution can comprise several parts such as design of the deep material segmentation model, construction and labeling of an image sample set, joint calibration of a video camera and a solid-state radar, pose estimation of a material area.

In some embodiments, by using image data collected for the current operation scenario, the image sample set may be constructed, for training a deep semantic segmentation model; and the model is integrated into software, and software deployment is completed on the demolition robot.

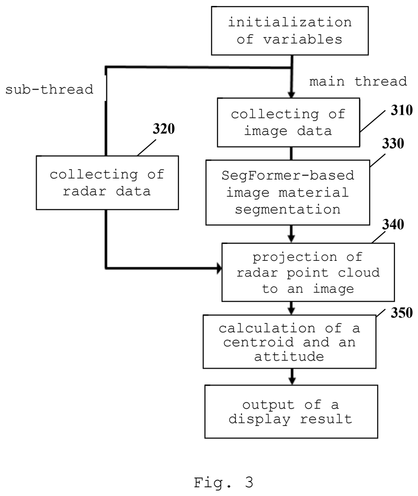

For example, this image processing technical solution is described below by an embodiment in Fig. 3.

Fig. 3 illustrates a flow diagram of an image processing method according to other embodiments of the present disclosure.

As shown in Fig. 3, after all variables of a program where this disclosed technical solution is integrated are initialized, the program may be divided into one main thread and one sub-thread to run the program simultaneously. For example, the sub-thread is responsible for collecting of radar data (i.e., point cloud data), and the main thread is responsible for: collecting of a visible light image (i.e., an image sample, a to-be-processed image, etc.); segmentation of material areas based on a SegFormer model; extracting point cloud data at a current time moment and projecting the point cloud data to a two-dimensional image coordinate system, thereby obtaining an image area to which the point cloud data belongs; and calculating a centroid and normal vector of each image area to guide a demolition head to operate in a manner of being perpendicular to a demolition plane, and visualize material segmentation, centroid and attitude results.

In step 310, a working scenario video of a demolition robot may be captured by an image collecting apparatus (e.g., a camera, a video camera, etc.), and a to-be-processed image or an image sample may be intercepted at a certain frame interval.

In step 320, three-dimensional point cloud data of a current operation scenario is obtained by a radar apparatus such as a solid-state radar.

In step 330, image segmentation is performed on the to-be-processed image by using a machine learning model such as the SegFormer model, different image areas corresponding to different material categories (the image area may also be referred to the material area).

Material identification not only needs collecting of a two-dimensional image of the scenario by a camera and segmentation of the material areas by using a material segmentation model, but also needs determination of a pose (a centroid, a surface normal vector and the like of the material area in a three-dimensional space) of each material area. Therefore, it also needs the radar to detect some three-dimensional points on a surface of an object corresponding to each material area, for predicting the centroid and the attitude.

In step 340, in order to determine which material area each three-dimensional point cloud data is projected into, there is a need to transform the point cloud data to the two-dimensional image by a series of transformations. The projection of the radar point cloud data can be implemented according to which material area two-dimensional image coordinates corresponding to the three-dimensional point cloud data after the transformation is located in.

For example, the above series of transformations comprises a three-dimensional rigid transformation (such as rotation and translation) from a radar coordinate system to a camera coordinate system, and perspective projection transformations from the camera coordinate system to an image target surface coordinate system and an image row-column coordinate system.

The step 320 may be performed in parallel with any one or more of the steps 310, 330, 340, 350.

In step 350, pose information of each image area is estimated according to a plurality of corresponding point cloud data of each image area. For example, the pose information may comprise information such as a normal vector and a centroid of the image area. The estimated pose information may be outputted in a form of a display result to guide the operation.

Fig. 4a is a block diagram of a demolition robot according to some embodiments of the present disclosure.

As shown in Fig. 4a, the demolition robot 4a comprises: a processor 41a configured to execute the image processing method in any of the above embodiments; and a controller 42a configured to control a demolition device to operate according to a material category corresponding to an image area and pose information of the image area, which are determined by an image processing apparatus.

In some embodiments, the demolition robot 4a further comprises: an image collecting apparatus 43a configured to obtain the to-be-processed image of the current operation scenario; and a radar apparatus 44a configured to obtain point cloud data of the current operation scenario.

In some embodiments, the processor 41a performs the image processing method through a main thread, the controller 42a controls the demolition device through the main thread, the image collecting apparatus 43a obtains the to-be-processed image of the current operation scenario through the main thread, and the radar apparatus 44a obtains the point cloud data of the current operation scenario through a sub-thread.

In some embodiments, the main thread and the sub-thread are run in parallel.

In the above embodiments, for an actual working condition of the robot, a deep semantic segmentation model is applied to material identification of an operation object; and model training is performed in a manner of supervision learning, and working requirements of the robot in different operation scenarios can be met by collecting a data set of the actual working scenario, which has universality and robustness.

In addition, by use of a video camera and a solid-state radar, a material identification and pose estimation method and system where image and radar are combined are designed, which can achieve obtaining of three-dimensional coordinates and pose estimation of a target point of an operation object; and can convert an operation behavior such as demolition operation of the robot into intelligent and automated operation, improving the working efficiency, and ensuring personnel safety under a severe construction environment.

Fig. 4b is a block diagram of an image processing apparatus according to some embodiments of the present disclosure.

As shown in Fig. 4b, the image processing apparatus 4b comprises: a segmentation unit 41b configured to perform an image segmentation on a to-be-processed image of a current operation scenario to obtain a plurality of image areas in the to-be-processed image, different image areas corresponding to different material categories; a projection unit 42b configured to project point cloud data of the current operation scenario into an image area corresponding to the point cloud data in the plurality of image areas, according to a transformation relation between an image coordinate system where the to-be-processed image is located and a world coordinate system; an estimation unit 43b configured to estimate an pose information of each image area, according to a plurality of corresponding point cloud data of the each image area.

In some embodiments, the estimation unit 43b determines at least one target plane for the each image area according to the plurality of corresponding point cloud data of the each image area, and determines the pose information of the each image area according to the at least one target plane.

In some embodiments, the at least one target plane comprises a plurality of target planes, the pose information comprises a normal vector, and the estimation unit 43b selects a plurality of candidate point cloud data from the plurality of corresponding point cloud data, determines one target plane according to the plurality of candidate point cloud data, repeats above steps until the plurality of target planes are determined, and determines a normal vector of the each image area according to a mean of normal vectors of the plurality of target planes.

In some embodiments, the pose information comprises a centroid, and the estimation unit 43b determines a centroid of the each image area according to the plurality of corresponding point cloud data.

In some embodiments, the projection unit 42b coincides a radar coordinate system for collecting the point cloud data with the world coordinate system; and jointly calibrates the world coordinate system and the image coordinate system to determine the transformation relation.

In some embodiments, the segmentation unit 41b encodes the to-be-processed image by using an attention mechanism module in a machine learning model, and decodes the encoding result by using a dilated convolution module in the machine learning model to obtain the plurality of image areas.

In some embodiments, the dilated convolution module comprises a plurality of dilated convolutional layers, different dilated convolutional layers having different dilation rates.

In some embodiments, the machine learning model further comprises a dropout layer connected after the dilated convolution module.

In some embodiments, the machine learning model further comprises a convolution module comprising a plurality of convolutional layers, and the machine learning model is trained by: calculating a loss function value of each convolutional layer according to an output of the each convolutional layer in the plurality of convolutional layers; calculating a loss function value of the dilated convolution module according to an output of the dilated convolution module; and fusing the loss function value of the each convolutional layer and the loss function value of the dilated convolution module to determine a comprehensive loss function value for training the machine learning model.

In some embodiments, the current operation scenario comprises a demolition operation scenario, and the material category comprises a building material category.

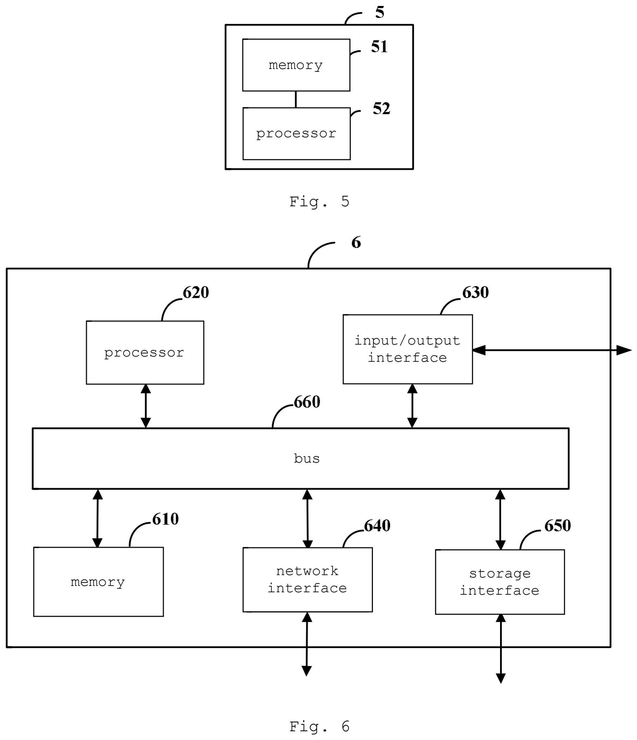

Fig. 5 illustrates a block diagram of an image processing apparatus according to other embodiments of the present disclosure.

As shown in Fig. 5, the image processing apparatus 5 of this embodiment comprises: a memory 51 and a processor 52 coupled to the memory 51, the processor 52 being configured to perform, based on instructions stored in the memory 51, the image processing method in any of the embodiments of the present disclosure.

The memory 51 may include, for example, a system memory, a fixed non-volatile storage medium, and the like. The system memory has thereon stored, for example, an operating system, an application program, a boot loader, a database, and other programs.

Fig. 6 illustrates a block diagram of an image processing apparatus according to still other embodiments of the present disclosure.

As shown in Fig. 6, the image processing apparatus 6 of this embodiment comprises: a memory 610 and a processor 620 coupled to the memory 610, the processor 620 being configured to perform, based on instructions stored in the memory 610, the image processing method in any of the above embodiments.

The memory 610 may include, for example, a system memory, a fixed non-volatile storage medium, and the like. The system memory has thereon stored, for example, an operating system, an application program, a boot loader, and other programs.

The image processing apparatus 6 may further comprises an input/output interface 630, a network interface 640, a storage interface 650, and the like. These interfaces 630, 640, 650 and the memory 610 may be connected with the processor 620, for example, via a bus 660. The input/output interface 630 provides a connection interface for input/output devices such as a display, a mouse, a keyboard, a touch screen, a microphone, and a sound box. The network interface 640 provides a connection interface for a variety of networking devices. The storage interface 650 provides a connection interface for external storage devices such as an SD card and a USB flash disk.

It should be appreciated by those skilled in the art that, the embodiments of the present disclosure may be provided as a method, system, or computer program product. Accordingly, the present disclosure may take a form of an entire hardware embodiment, an entire software embodiment, or an embodiment combining software and hardware aspects. Moreover, the present disclosure may take a form of a computer program product implemented on one or more computer-usable non-transitory storage media having computer-usable program code embodied therein and comprising, but not limited to, a disk memory, CD-ROM, optical memory, etc.

So far, the image processing method, image processing apparatus, demolition robot, computer-readable storage medium, and computer program product according to the present disclosure have been described in detail. Some details well known in the art have not been described in order to avoid obscuring the concepts of the present disclosure. Those skilled in the art can fully appreciate how to implement the technical solution disclosed herein according to the foregoing description.

The method and system of the present disclosure may be implemented in a number of ways. The method and system of the present disclosure may be implemented, for example, by software, hardware, firmware, or any combination of software, hardware, and firmware. The above order for the steps of the method is for illustration only, and the steps of the method of the present disclosure are not limited to the order specifically described above unless specifically stated otherwise. Furthermore, in some embodiments, the present disclosure may further be implemented as programs recorded in a recording medium, the programs comprising machine-readable instructions for implementing the method according to the present disclosure. Therefore, the present disclosure further covers a recording medium storing a program for performing the method according to the present disclosure.

Although some specific embodiments of this disclosure have been described in detail by examples, those skilled in the art should understand that the above examples are for illustration only and are not intended to limit the scope of this disclosure. Those skilled in the art should understand that modifications can be made to the above embodiments without departing from the scope and spirit of this disclosure. The scope of this disclosure is defined by the appended claims.

**Claims**

1. An image processing method, comprising:

    performing an image segmentation on a to-be-processed image of a current operation scenario to obtain a plurality of image areas in the to-be-processed image, different image areas corresponding to different material categories;
    projecting point cloud data of the current operation scenario into an image area corresponding to the point cloud data in the plurality of image areas, according to a transformation relation between an image coordinate system where the to-be-processed image is located and a world coordinate system; and
    estimating pose information of each image area, according to a plurality of corresponding point cloud data of the each image area.

2. The image processing method according to claim 1, wherein the estimating the pose information of the each image area comprises:

    determining at least one target plane for the each image area, according to the plurality of corresponding point cloud data of the each image area; and
    determining the pose information of the each image area, according to the at least one target plane.

3. The image processing method according to claim 2, wherein the at least one target plane comprises a plurality of target planes, the pose information comprises a normal vector, and the estimating the pose information of the each image area comprises:

    selecting a plurality of candidate point cloud data from the plurality of corresponding point cloud data;
    determining one target plane according to the plurality of candidate point cloud data;
    repeating above steps until the plurality of target planes are determined; and
    determining a normal vector of the each image area according to a mean of normal vectors of the plurality of target planes.

4. The image processing method according to any of claims 1 to 3, wherein the pose information comprises a centroid, and
the estimating the pose information of the each image area comprises:
determining a centroid of the each image area according to the plurality of corresponding point cloud data.

5. The image processing method according to any of claims 1 to 4, wherein the projecting the point cloud data of the current operation scenario into the image area corresponding to the point cloud data in the plurality of image areas comprises:

coinciding a radar coordinate system for collecting the point cloud data with the world coordinate system; and
jointly calibrating the world coordinate system and the image coordinate system to determine the transformation relation.

6. The image processing method according to any of claims 1 to 5, wherein the performing the image segmentation on the to-be-processed image of the current operation scenario comprises:

encoding the to-be-processed image with an attention mechanism module in a machine learning model; and
decoding the encoding result with a dilated convolution module in the machine learning model to obtain the plurality of image areas.

7. The image processing method according to claim 6, wherein the dilated convolution module comprises a plurality of dilated convolutional layers, different dilated convolutional layers having different dilation rates.

8. The image processing method according to claim 6 or 7, wherein the machine learning model further comprises a dropout layer connected after the dilated convolution module.

9. The image processing method according to any of claims 6 to 8, wherein the machine learning model further comprises a convolution module comprising a plurality of convolutional layers, and the machine learning model is trained by:

calculating a loss function value of each convolutional layer of the plurality of convolutional layers, according to an output of the each convolutional layer;
calculating a loss function value of the dilated convolution module, according to an output of the dilated convolution module; and
fusing the loss function value of the each convolutional layer and the loss function value of the dilated convolution module to determine a comprehensive loss function value for training the machine learning model.

10. The image processing method according to any of claims 1 to 9, wherein the current operation scenario comprises a demolition operation scenario, and the material category comprises a building material category.

11. A demolition robot, comprising:

a processor configured to perform the image processing method according to any of claims 1 to 10; and
a controller configured to control a demolition device to operate according to a material category corresponding to an image area and pose information of the image area, which are determined by an image processing apparatus.

12. The demolition robot according to claim 11, further comprising:

an image collecting apparatus configured to obtain a to-be-processed image of a current operation scenario; and
a radar apparatus configured to obtain point cloud data of the current operation scenario.

13. The demolition robot according to claim 12, wherein
the processor performs the image processing method through a main thread, the controller controls the demolition device through the main thread, the image collecting apparatus obtains the to-be-processed image of the current operation scenario through the main thread, and the radar apparatus obtains the point cloud data of the current operation scenario through a sub-thread.

**14.** The demolition robot according to claim 13, wherein the main thread and the sub-thread are run in parallel.

**15.** An image processing apparatus, comprising:

a segmentation unit configured to perform an image segmentation on a to-be-processed image of a current operation scenario to obtain a plurality of image areas in the to-be-processed image, different image areas corresponding to different material categories;

a projection unit configured to project point cloud data of the current operation scenario into an image area corresponding to the point cloud data in the plurality of image areas, according to a transformation relation between an image coordinate system where the to-be-processed image is located and a world coordinate system; and

an estimation unit configured to estimate pose information of each image area, according to a plurality of corresponding point cloud data of the each image area.

**16.** An image processing apparatus, comprising:

a memory; and

a processor coupled to the memory, the processor being configured to, based on instructions stored in the memory, perform an image processing method according to any of claims 1 to 10.

**17.** A computer-readable storage medium having a computer program stored thereon, that when executed by a processor, implement an image processing method according to any of claims 1 to 10.

**18.** A computer program product comprising instructions, that when executed by a processor, cause the processor to perform an image processing method according to any of claims 1 to 10.

110

```
perform an image segmentation
  on a to-be-processed image
```

120

```
project point cloud data into a
   corresponding image area
```

130

```
estimate pose information of
       the image area
```

Fig. 1

Fig. 2a

Fig. 2b

Fig. 2c

Fig. 2d

Fig. 2e

Fig. 3

**4a**

processor
41a

controller
42a

image
collecting
apparatus
43a

radar
apparatus
44a

Fig. 4a

**4b**

segmentati
on unit
41b

projection
unit 42b

estimation
unit 43b

Fig. 4b

**5**

memory — **51**

processor — **52**

Fig. 5

**6**

processor — **620**

input/output interface — **630**

bus — **660**

memory — **610**

network interface — **640**

storage interface — **650**

Fig. 6

## INTERNATIONAL SEARCH REPORT

| International application No. |
|---|
| **PCT/CN2024/121328** |

### A. CLASSIFICATION OF SUBJECT MATTER

G06T 7/70(2017.01)i; G06T7/11(2017.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, CNKI, WPABS, DWPI, USTXT, WOTXT, EPTXT: 破拆, 机器人, 分割, 材质, 点云, 位姿, 坐标, 法向量, 均值, 平均, 平面, 质心, disassembly, robot, segmentation, material, coordinate, normal vector, mean, plane, centroid

### C. DOCUMENTS CONSIDERED TO BE RELEVANT

| Category* | Citation of document, with indication, where appropriate, of the relevant passages | Relevant to claim No. |
|---|---|---|
| PX | CN 118071822 A (JIANGSU XUGONG ENGINEERING MACHINERY RESEARCH INSTITUTE CO., LTD. et al.) 24 May 2024 (2024-05-24) claims 1-18, and description, paragraphs [0050]-[0167] | 1-18 |
| Y | CN 117381789 A (JIANGSU XUGONG ENGINEERING MACHINERY RESEARCH INSTITUTE CO., LTD. et al.) 12 January 2024 (2024-01-12) description, paragraphs [0036]-[0122], and figure 4 | 1-18 |
| Y | CN 117611663 A (SHENZHEN HUAHAN WEIYE TECHNOLOGY CO., LTD.) 27 February 2024 (2024-02-27) description, paragraphs [0035]-[0072] | 1-18 |
| A | CN 114898313 A (GUANGZHOU WERIDE TECHNOLOGY CO., LTD.) 12 August 2022 (2022-08-12) entire document | 1-18 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 November 2024** | **25 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121328**

| Patent document cited in search report | | | Publication date (day/month/year) | Patent family member(s) | Publication date (day/month/year) |
|---|---|---|---|---|---|
| CN | 118071822 | A | 24 May 2024 | None | |
| CN | 117381789 | A | 12 January 2024 | None | |
| CN | 117611663 | A | 27 February 2024 | None | |
| CN | 114898313 | A | 12 August 2022 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410364379